# EUROPEAN PATENT SPECIFICATION

(11) **EP 2 342 059 B1**
(45) Date of publication and mention of the grant of the patent: **10.09.2014**
(21) Application number: 09812466.2
(22) Date of filing: 26.10.2009
(51) Int. Cl.: B29C 45/17, B08B 15/00

(54) **MOULDING AND INJECTION PRESS FOR THERMO-PLASTIC MATERIALS**
FORM- UND SPRITZPRESSE FÜR THERMOPLASTISCHE MATERIALIEN
PRESSE DE MOULAGE ET D'INJECTION POUR MATÉRIAUX THERMOPLASTIQUES

(30) Priority: 03.11.2008 IT PD20080319
(43) Date of publication of application: 13.07.2011
(73) Proprietor: Sapiselco S.r.l., 35020 Saonara (IT)
(72) Inventor: GRIGGIO, Stefano, I-35020 Saonara (pd) (IT); GRIGGIO, Federico, I-35020 Saonara (pd) (IT)
(74) Representative: Vinci, Marcello
(86) International application number: PCT/IB2009/054718
(87) International publication number: WO 2010/061298

(56) References cited:
- DE-A1-102008 017 138
- DE-U1- 8 418 906
- JP-A- 58 067 429
- JP-A- 60 245 524
- DATABASE WPI Week 199305 Thomson Scientific, London, GB; AN 1993-043494 XP002547087 & SU 1 717 392 A1 (ZAPORO KOMMUNAR CAR WKS) 7 March 1992 (1992-03-07) & SU 1 717 392 A1 (ZAPOROZH AVTOMOBIL [SU]) 7 March 1992 (1992-03-07)

## Description

The present patent relates to presses for moulding thermoplastic materials and particularly concerns a new system for extracting the fumes and vapours released during the injection of such thermoplastic substances in the moulds. Numerous articles are made using thermoplastic materials.

The manufacture of such articles entails the heating of granules of thermoplastic material inside heated screw conveyors that inject the fluidified thermoplastic material into suitable moulds. After the thermoplastic material has been injected and subsequently allowed to cool adequately, each mould is opened to extract the article thus formed.

With each injection, the vapours and fumes generated by the injected thermoplastic material can escape from the contact surfaces between the mould and the injection press and, through the hole in the nozzle, spread into the surrounding environment.

These fumes and vapours may be hazardous, polluting, harmful and toxic, so they must be extracted from the production area where there are personnel at work to collect the thermoformed products, and carried to a suitable air purification and treatment system before their release into the atmosphere.

An extractor hood is currently used for each injection press, positioned above the area coinciding with the joint between the injection press and the mould.

All such extractor hoods are connected by means of an extractor device to a suitable air treatment and purification system.

It is therefore necessary for the extractor device to be capable of a high airflow rate, sufficient to ensure an adequate suction at all the extractor hoods, and consequently for all the injection areas.

An extractor device with these characteristics is very bulky and also expensive, given that its efficiency and utility for each injection press is cyclically limited to a few seconds, while it extracts the surrounding air at exaggeratedly high flow rates for several minutes.

Modem extractor hoods are positioned at a distance of several dozen centimetres from the contact surface between the injection press and the mould and, as a consequence, in order to guarantee the effective extraction of the fumes and vapours, they also cover a sizable area surrounding the contact surface between the injection press and the mould.

The above-mentioned distance, dimensions and extraction flow rate fail, however, to ensure the complete removal of the fumes and vapours because any lateral air movement, caused by a door being opened in the room, for instance, displaces the vapours and fumes laterally beyond the range of the extractor hood.

The air extraction and disposal systems, and the corresponding extractor hoods, are currently installed and their position is adjusted separately from the moulding machinery, making it difficult to correctly attach, position and orient the extractor hoods so as to obtain an adequate extraction of the fumes and vapours.

Document SU-A-1717392 discloses a press having a suction system with a suction opening close to a press injection nozzle. The suction system is provided with a valve.

To overcome all the above-mentioned drawbacks, a new press for the injection and moulding of thermoplastic materials has been designed and realised, that is fitted with its own, ad hoc, fumes extraction means.

One object of the new moulding press is to completely extract the fumes and vapours released by the thermoplastic materials being used.

Another object of the new moulding press is to reduce the overall dimensions of the means for extracting the fumes and vapours.

Another object of the new moulding press is to always guarantee the most suitable positioning of the means for extracting the fumes and vapours. Another object of the new moulding press is to control or adjust the extraction flow rates according to the needs of the various production stages. Another object of the new moulding press is to save the time it would take and procedures involved to install the means for extracting the fumes and vapours.

These and other direct and complementary objects are achieved by a system in accordance with claim 1.

The injection and moulding press comprises an electrically heated cylinder containing a worm screw, a hopper for loading granules of thermoplastic material into the heated cylinder. The screw conveyor is designed to rotate around its own axis for the loading and melting of the material, and to move axially, acting as a piston to inject the material inside the mould. The head of the cylinder is fitted with a nozzle that is kept in contact with the injection hole in the mould.

In the vicinity of said nozzle on the cylinder, there is a suction opening connected to a duct running generically alongside the cylinder.

The other end of said duct is designed to be connected to any air extraction and treatment system.

An on/off valve, or air flow limiting valve, or dividing valve, controlled by the mechanical and/or electrical system that superintends the various stages of injection process can be installed along said duct, or at the end of the duct connected to the air extraction and treatment system, in order to reduce or cut off the air extraction through said opening when it is unnecessary.

This limitation of the air extraction through the opening means that the same extractor device can achieve a greater extraction capacity at the other openings serving other moulding presses connected to the same air extraction and treatment system during the periods of time in which the corresponding fumes and vapours need to be extracted.

The characteristics of the press for the injection and moulding of thermoplastic materials with an ad hoc fumes extractor device are further clarified in the description given below, with reference to the drawings, which are attached as a non-limiting example.

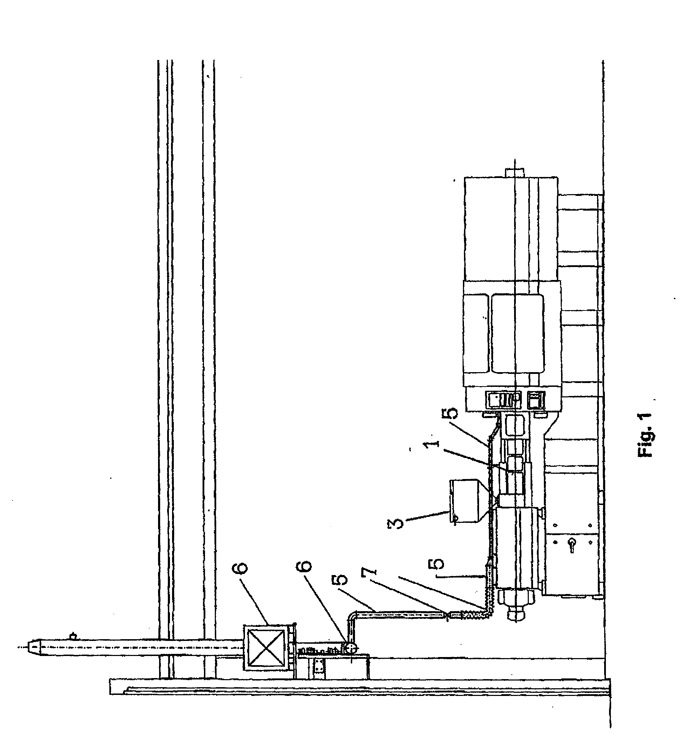

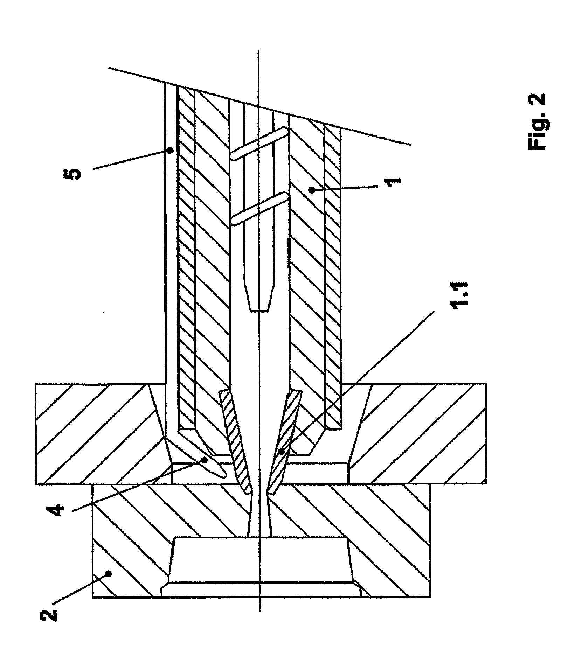

Figure 1 shows a side view of the new moulding press, while figure 2 shows details of the nozzle (1.1) on the cylinder (1) and of the wall of the mould (2) to which said nozzle is connected (1.1).

The injection and moulding press comprises an electrically heated cylinder (1) containing a screw conveyor, a hopper (3) for loading granules of thermoplastic material into the heated cylinder.

The head of the cylinder (1) is fitted with a nozzle (1.1), preferably around 5 cm in diameter, that is kept in contact with, or in close proximity to the injection hole in the mould (2).

A suction opening (4), connected to a duct (5) running generically alongside said cylinder (1), is located in the vicinity of said nozzle (1.1) on the cylinder (1).

The other end of said duct (5) is designed to be connected to any type of suction and purification system (6).

Installed along said duct (5), there is an on/off valve, or air flow limiting valve, or dividing valve (7), controlled by the mechanical and/or electrical system that superintends the various injection stages, so as to reduce or cut off the air extraction through said opening (4) when it is unnecessary.

This reduction of the air intake through the suction openings (4) enables a greater air extraction capacity to be achieved at other suction openings (4) serving other moulding presses connected to the same air extraction and treatment system (6), during the period of time in which it may be necessary to extract fumes and vapours therefrom.

Since air is drawn through the suction openings (4) from only a short distance away from the nozzle (1.1), the fumes and vapours generated are aspirated in the immediate vicinity of the point where they are emitted. This gives rise to a more effective extraction of said vapours and fumes, enabling a lower suction capacity to be used for said purpose.

The dimensions of the air suction openings (4) are extremely limited so it does not interfere with the various moulding and injection procedures, nor with any servicing performed on the moulding press.

Two or more suction openings (4) may be used, positioned around the area where the fumes and vapours are usually released, and connected to the same extractor duct (5).

The new moulding press only demands the connection of the duct (5) to the air extraction and treatment system, and consequently entails fewer assembly and installation procedures than for the known moulding presses and the known extractor hoods.

At the time of its installation, or during any subsequent servicing, the new moulding press does not require any procedures to adjust the extractor hoods, because the suction opening (4) has been built so that it is already in the optimal position for intercepting the fumes and vapours.

The air flow limiting or dividing valve (7) enables the air extraction flow rate to be reduced or cut off at times when the press does not produce fumes and vapours, and subsequently assures a full extraction capacity at the times when it is necessary to remove any fumes and vapours. This enables an extractor with a lower capacity to be installed while nonetheless ensuring the complete extraction and treatment of fumes and vapours. An optimal use is thus made of the air extraction and treatment system throughout the period of time during which it is operated.

## Claims

1. System including a press for moulding and injecting thermoplastic materials in combination with other presses for moulding and injecting thermoplastic materials, said press comprising a worm screw housed in a cylinder (1) provided with a nozzle (1.1) suited to be coupled and connected with the mould (2), said press being also provided with one or more fume and vapour suction openings (4) in proximity to said nozzle (1.1) and/or to the areas where said fumes and vapours are emitted, and wherein said suction openings (4) are connected with at least one duct (5), that in turn is connected with a suction and purification system (6), said duct (5) being positioned beside the cylinder (1) of the press, wherein said duct (5) is provided with a stop valve suited to close the suction openings (4) of the moulding press and thus interrupt suction and wherein said stop valve closes the suction openings (4) of the moulding press and thus interrupts suction in favour of the other suction openings of the other moulding presses connected with the same suction and purification system (6).

2. System according to claim 1, wherein said duct (5) is provided with an air flow limiting or dividing valve (7) that is suited to limit the intake of the suction openings (4) of the moulding press.

3. System according to claim 2, wherein the presses are identical.

4. Moulding press according to the preceding claims, wherein the presses are identical and said stop valves and/or said air flow limiting or dividing valves (7) are controlled by a mechanical and/or electrical and/or electronic system that supervises the various injection stages of the various moulding presses as well as said valves and said suction and purification system (6).

## Patentansprüche

1. Eine Presse einschließendes System zum Formen und Einspritzen von thermoplastischen Materialien in Kombination mit anderen Pressen zum Formen und Einspritzen von thermoplastischen Materialien, wobei die besagte Presse eine Endlosschnecke in einem Zylinder (1) mit einer Düse (1.1) aufweist, dazu geeignet, mit dem Formwerkzeug (2) gekuppelt und verbunden zu werden, wobei die besagte Presse außerdem mit einer oder mehreren Rauch- und Dampfabzugsöffnungen (4) in der Nähe der besagten Düse (1.1) und/oder der Bereiche, in denen der besagte Rauch oder Dampf abgelassen wird, versehen ist, und wobei die besagten Abzugsöffnungen (4) mit wenigstens einer Leitung (5) verbunden sind, die ihrerseits mit einem Abzug- und Klärsystem (6) verbunden ist, wobei die besagte Leitung (5) neben dem Zylinder (1) der Presse positioniert ist, wobei die besagte Leitung (5) ein Absperrventil aufweist, das geeignet ist, die Abzugsöffnungen (4) der Formpresse zu schließen und so die Absaugung zu unterbrechen, und wobei das besagte Absperrventil die Abzugsöffnungen (4) der Formpresse schließt und somit die Absaugung zugunsten anderer, mit demselben Abzug- und Klärsystem (6) verbundenerAbzugsöffnungen anderer Formpressenunterbricht.

2. System gemäß Patentanspruch 1, wobei die besagte Leitung (5) mit einem Ventil zur Begrenzung oder Teilung des Luftstroms (7) versehen ist, das geeignet ist, den Einlass der Abzugsöffnungen (4) der Formpresse zu begrenzen.

3. System gemäß Patentanspruch 2, wobei die Pressen identisch sind.

4. System gemäß den vorstehenden Patentansprüchen, wobei die Pressen identisch sind und die besagten Absperrventile und/oder die besagten Ventil zur Begrenzung oder Teilung des Luftstroms (7) durch ein mechanisches und/oder elektrisches und/oder elektronisches System gesteuert werden, das die verschiedenen Einspritzstadien der verschiedenen Formpressen ebenso wie die besagten Ventile und das besagte Abzug- und Klärsystem (6) überwacht.

## Revendications

1. Système comprenant une presse pour le moulage et l'injection de matériaux thermoplastiques en combinaison avec d'autres presses pour le moulage et l'injection de matériaux thermoplastiques, ladite presse comprenant une vis sans fin logée dans un cylindre (1) doté d'un embout (1.1) indiqué pour être accouplé et relié avec le moule (2), ladite presse étant en outre dotée d'une ou plusieurs ouvertures d'aspiration de fumées ou de vapeurs (4) à proximité dudit embout (1.1) et/ou des zones où lesdites fumées et vapeurs sont dégagées, et où lesdites ouvertures d'aspiration (4) sont reliées avec au moins un tuyau (5), qui à son tour est relié avec un système d'aspiration et de purification (6), ledit tuyau (5) étant positionné à côté du cylindre (1) de la presse, où ledit tuyau (5) est doté d'une soupape d'arrêt apte à fermer les ouvertures d'aspiration (4) de la presse de moulage et à interrompre ainsi l'aspiration et où ladite soupape d'arrêt ferme les ouvertures d'aspiration (4) de la presse de moulage et interrompt ainsi l'aspiration en faveur des autres ouvertures d'aspiration des autres presses de moulage reliées avec le même système d'aspiration et purification (6).

2. Système selon la revendication 1, où ledit tuyau (5) est doté d'une vanne limitatrice ou séparatrice de débit d'air (7) qui est indiquée pour limiter l'admission des ouvertures d'aspiration (4) de la presse de moulage.

3. Système selon la revendication 2, où les presses sont identiques.

4. Presse de moulage selon les revendications précédentes, où les presses sont identiques et lesdites soupapes d'arrêt et/ou lesdites vannes limitatrices ou séparatrices de débit d'air (7) sont commandées par un système mécanique et/ou électrique et/ou électronique qui surveille les différentes phases d'injection des différentes presses de moulage et aussi lesdits soupapes et ledit système d'aspiration et de purification (6).
